# EUROPEAN PATENT SPECIFICATION

(11) **EP 2 973 113 B1**
(45) Date of publication and mention of the grant of the patent: **26.06.2019**
(21) Application number: 14764067.6
(22) Date of filing: 14.03.2014
(51) Int. Cl.: G16Z 99/00, G01C 11/04, G06T 5/00, G06T 5/50, G06K 9/00, G06K 9/46, B64G 1/10

(54) **MODELED ATMOSPHERIC CORRECTION OBJECTS**
OBJEKTE FÜR MODELLIERTE ATMOSPHÄRENKORREKTUR
OBJETS DE CORRECTION ATMOSPHÉRIQUE MODÉLISÉE

(30) Priority: 15.03.2013 US 201313844309
(43) Date of publication of application: 20.01.2016
(73) Proprietor: Digitalglobe, Inc., Westminster CO 80234 (US)
(72) Inventor: LEONARD, Victor, Longmont, Colorado 80503 (US); PACIFICI, Fabio, Longmont, Colorado 80503 (US)
(74) Representative: Mansfield, Peter Turquand
(86) International application number: PCT/US2014/029156
(87) International publication number: WO 2014/144655

(56) References cited:
- DE-A1- 4 102 579
- US-A1- 2002 096 622
- US-A1- 2010 008 595
- US-A1- 2010 142 814
- US-A1- 2010 189 363
- US-A1- 2012 281 085
- US-A1- 2013 006 534
- LIU C H ET AL: "IMAGE-BASED DERIVATION OF AEROSOL OPTICAL DEPTH TO CORRECT THE ATMOSPHERIC EFFECT FOR SATELLITE IMAGE", QUANTITATIVE REMOTE SENSING FOR SCIENCE AND APPLICATIONS. FIRENZE, JULY 10 - 14, 1995; [INTERNATIONAL GEOSCIENCE AND REMOTE SENSING SYMPOSIUM], NEW YORK, IEEE, US, vol. 1, 10 July 1995 (1995-07-10), pages 151-153, XP000605054, DOI: 10.1109/IGARSS.1995.519675 ISBN: 978-0-7803-2568-5
- ZAGOLSKI F ET AL: "Atmospheric corrections of AVIRIS images with a procedure based on the inversion of 5S model", GEOSCIENCE AND REMOTE SENSING SYMPOSIUM, 1994. IGARSS '94. SURFACE AND ATMOSPHERIC REMOTE SENSING: TECHNOLOGIES, DATA ANALYSIS AND INTERPRET ATION., INTERNATIONAL PASADENA, CA, USA 8-12 AUG. 1994, NEW YORK, NY, USA,IEEE, US, vol. 1, 8 August 1994 (1994-08-08), pages 44-46, XP010138286, DOI: 10.1109/IGARSS.1994.399027 ISBN: 978-0-7803-1497-9
- BO-CAI GAO ET AL: "An Atmospheric Correction Algorithm for Remote Sensing of Bright Coastal Waters Using MODIS Land and Ocean Channels in the Solar Spectral Region", IEEE TRANSACTIONS ON GEOSCIENCE AND REMOTE SENSING, IEEE SERVICE CENTER, PISCATAWAY, NJ, US, vol. 45, no. 6, 1 June 2007 (2007-06-01), pages 1835-1843, XP011182472, ISSN: 0196-2892, DOI: 10.1109/TGRS.2007.895949

## Description

### Background

The use of satellite-based and aerial-based imagery is popular among government and commercial entities. One of the challenges in obtaining high quality images of the earth is the presence of the atmosphere between the surface of the earth and the satellite collecting the image. This atmosphere has water vapor and aerosols therein that can cause the scattering of light, as well as clouds that can occlude ground areas that otherwise might be images. In addition, clouds can also block sunlight from directly illuminating areas that are being imaged.

Highly accurate classification of landcover types and states is essential to extracting useful information, insight and prediction for a wide variety of remote sensing applications. In many cases, this classification of type and state is dependent on multi-temporal observations. Remote sensing includes measuring the radiance of the electromagnetic energy received by the remote sensor. More valuable than radiance received is the reflectance of the material on the ground. Remotely sensed measurements corrected to units of reflectance (using a ratio of incident electromagnetic energy received to reflected energy at the ground) depend on properties of the ground material, while measurements of radiance (quantity of electromagnetic energy) are affected by numerous external environmental variables. Therefore, correction to reflectance is crucial for quantitative and multi-temporal applications.

In all cases, there are a number of confounding factors to deal with including opaque clouds, cirrus clouds, aerosols, water vapor, ice, snow, shadows, bidirectional reflectance distribution function (BRDF) effects and transient coverings like water, dust, snow, ice and mobile objects. Pseudo invariant objects (PIOs) are often used for on-orbit calibration of relatively stable sensors because the PIOs are in useful states often enough. But there are not enough truly stable PIOs in the world with required spatial density to deal with the highly variable confounding factors of images.

For example US 2012/0281085 (Ingram et al) describes a way of determining parameters of aerosols present within an atmosphere from acquired imagery, by using one or more calibration references, which is an object having a surface made of a known material. The aerosol parameters can be inferred from the radiance of one or more calibration references present in one or more images of the same scene, using the known reflectance characteristics of the calibration reference. This implies that the calibration references are invariant. It is against this background that the present invention has been developed.

### Summary

The scope of the present invention is defined by the claims, and relates to a method of using modeled atmospheric correction objects (MACOs) according to claim 1.

The method includes determining which of the identified MACO sites are visible in the image and using the visible MACO sites to compute one or more atmospheric parameters. The one or more atmospheric parameters may include Aerosol Optical Depth. The method includes predicting a surface reflectance for a particular MACO site and determining a radiance received for the particular MACO site. The atmospheric parameters are computed by comparing the radiance received for the MACO site with the predicted surface reflectance for the MACO site. The method may further include updating information associated with each visible MACO site.

The method includes detecting whether or not a MACO site is impacted by transient conditions. The transient conditions may include one of cloud shadow, structure shadow, wetness, or snow cover. The method may further include determining which type of transient condition impacts the MACO site. The determining which type of transient condition operation may include using the radiance received in various spectral bands. The spectral bands may include at least a band in the green range of the spectrum and a band in the red range of the spectrum.

The method includes predicting a surface reflectance for a particular MACO site; determining a radiance received for the particular MACO site; and altering the radiance received for the particular MACO site to compensate for shadow effects. The atmospheric parameters are computed by comparing the altered radiance received for the MACO site with the predicted surface reflectance for the MACO site. The altering operation may include increasing the radiance in the spectral bands. The radiance may be increased by a lesser amount in the blue band than in other spectral bands.

### Brief Description of the Drawings

The disclosure herein is described with reference to the following drawings, wherein like reference numbers denote substantially similar elements:
Figure 1 is table of Modeled Atmospheric Correction Object (MACO) classes and states.
Figure 2 is an illustration of MACO clusters in an urban park.
Figure 3 is an illustration of potential MACO sites.
Figure 4 is an illustration of image-to-image variance in pixel positions.
Figure 5 is a graph of the reflectance signature of four materials in the annual crop cycle.
Figure 6 is a graph showing month-to-month signatures.
Figure 7 are a set of graphs that show how various amounts of aerosols affect the signature of three different types of ground materials.
Figure 8 is a flow diagram showing the main algorithm.
Figure 9 is a flow diagram of a portion of the main algorithm.
Figure 10 is an illustration of a satellite collecting images of the Earth's surface and communicating data to a ground station.

### Detailed Description

While the embodiments disclosed herein are susceptible to various modifications and alternative forms, specific embodiments thereof have been shown by way of example in the drawings and are herein described in detail. It should be understood, however, that it is not intended to limit the invention to the particular form disclosed, but rather, the invention is to cover all modifications, equivalents, and alternatives of embodiments of the invention as defined by the claims. The disclosure is described with reference to the drawings, wherein like reference numbers denote substantially similar elements.

Prior art makes simplifying assumptions as to the presence and stability of calibrating materials, and the uniformity of atmospheric effects that introduce significant errors across images. We have determined that ignoring the dynamic phenological variations and atmospheric element gradients within a scene can create classification errors of 45% or more. Multi-temporal anomaly detection suffers accordingly.

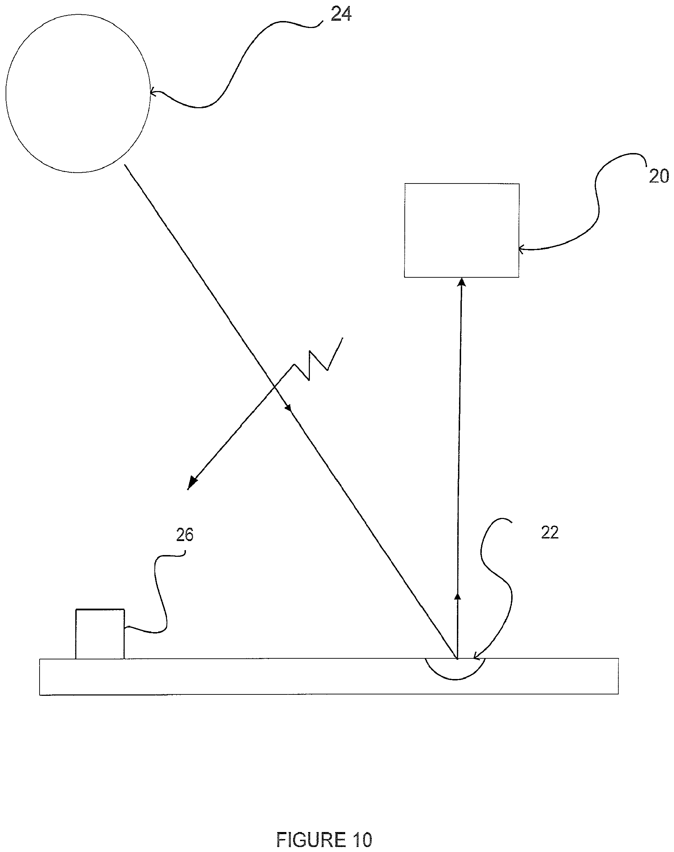

Figure 10 shows a platform 20, such as a satellite, sensing light coming thereto from the direction of a target 22. The image sensor in the satellite or aerial vehicle measures the radiance (light energy) received at the sensor. Of course, the radiance received is a function of surface reflectance at the target 22, the position of the sun 24, the position of the satellite 20, the atmosphere conditions (including the presence of clouds) and other factors. It is desirable to instead have the surface reflectance at the target 22 as opposed to the radiance received at the satellite 20, as it is a better indicator of the ground area to know how it reflects light as compared to how the ground area looks from the top-of-the-atmosphere with all the various atmospheric parameters affecting the image. The platform 20 can communicate with a ground station 26 to send image data thereto. The ground station 26 may perform various processing and/or storage of the image data and/or it may send the image data to other locations for processing and/or storage.

### What are Modeled Atmospheric Correction Object (MACO) clusters?

MACO clusters are effectively homogeneous clusters on the earth that are predictable enough that they can be used as estimators of ground truth in atmospheric correction inversion processes (e.g., converting radiance received to surface reflectance). MACO sites are interior patches within each MACO cluster; for example they may range in size from as small as 2m x 2m to as large as 60m x 60m.

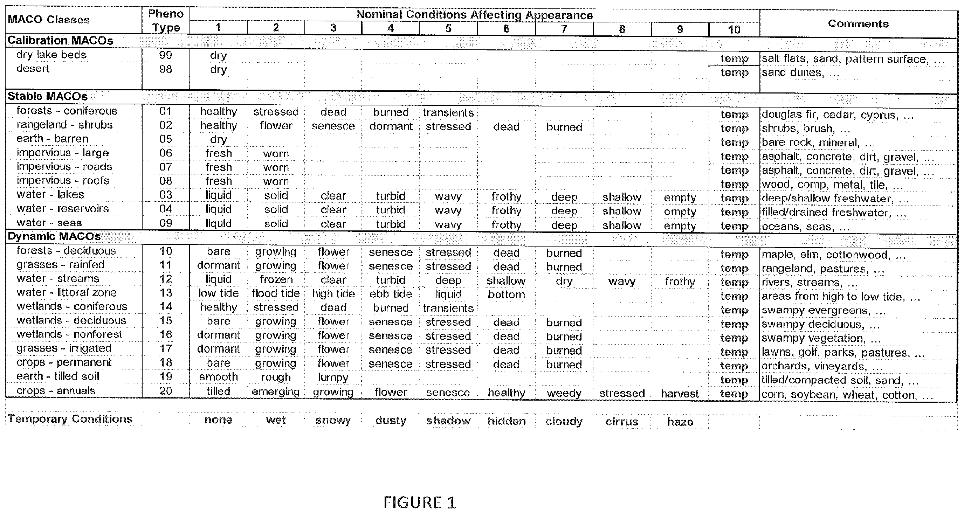

MACO clusters typically or generally change throughout a year, but they do so in relatively predictable ways depending on their land use and how they interact with humans and their environments. We extend the general definition of phenotypes to this broader context. Figure 1 shows the currently defined MACO phenotypes. Each MACO cluster is classified as one of the established types of calibration, stable, or dynamic MACO as typified in Figure 1. As shown, Calibrations MACOs may include dry lake beds (phenotype 99) or desert (phenotype 98). Stable MACOs may include forests/coniferous (phenotype 01), rangeland/shrubs (phenotype 02), earth/barren (phenotype 05), impervious/large (phenotype 06), impervious/roads (phenotype 07), impervious/roofs (phenotype 08), water/lakes (phenotype 03), water/reservoirs (phenotype 04), and water/seas (phenotype 09). Dynamic MACOs may include forests/deciduous (phenotype 10), grasses/rainfed (phenotype 11), water/streams (phenotype 12), water/littoral zone (phenotype 13), wetlands/coniferous (phenotype 14), wetlands/deciduous (phenotype 15), wetland/nonforest (phenotype 16), grasses/irrigated (phenotype 17), crops/permanent (phenotype 18), earth/tilled soil (phenotype 19), and crops/annuals (phenotype 20).

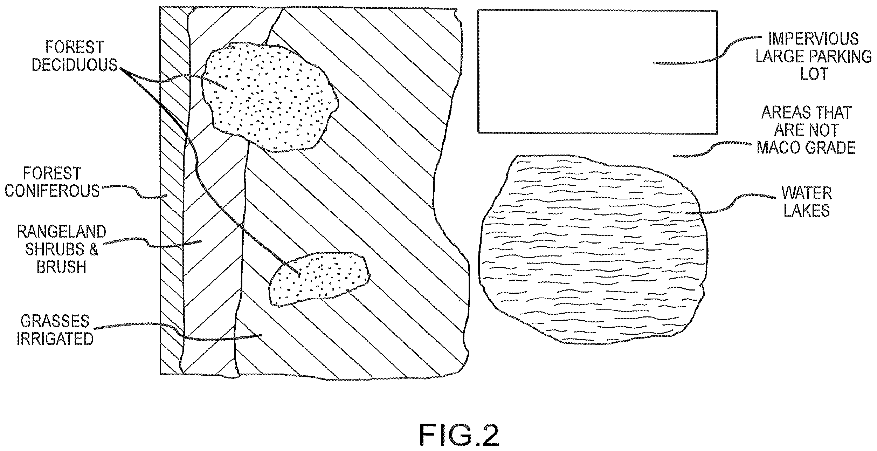

Figure 2 shows a notional example of MACO clusters in the context of an urban park. The phenotypes for this example include deciduous forests, coniferous forests, rangeland, irrigated grasses, a parking lot and a lake. Note that some areas within the park are potentially unsuitable because they are too heavily mixed or are likely to be covered by randomly distributed transient objects such as people, animals, and vehicles.

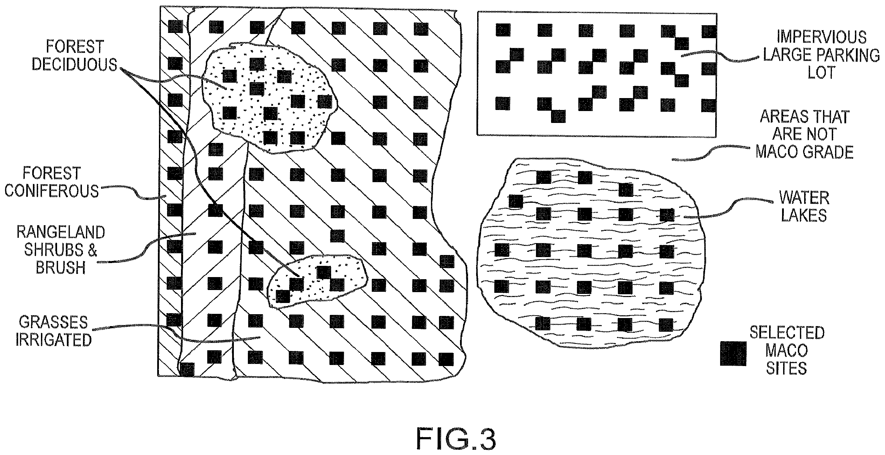

The projection of pixels from a sensor defines the boundaries of potential MACO sites. To be useful, most MACO sites need to be interior to the MACO cluster so that they have a reasonable probability of being homogeneous. There can be many reasons why a potential MACO site may not actually survive an arduous vetting process to become part of a control model. Those reasons are outlined in the discussion below. Figure 3 shows an example of potential MACO sites that were actually selected (black tiles) based on proximity to MACO cluster boundaries and other factors. Note that the rest of the potential MACO sites were not selected (clear tiles).

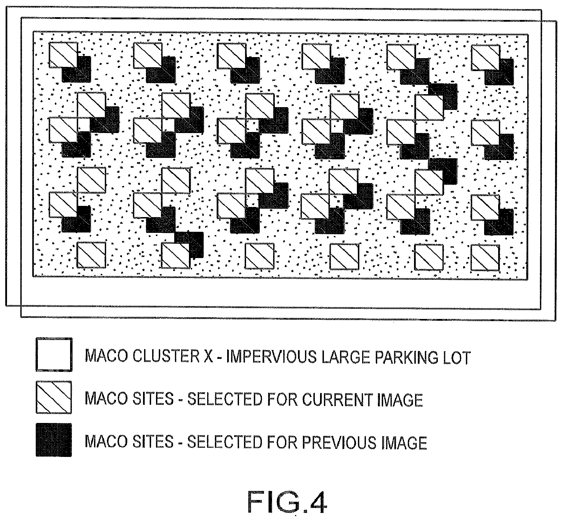

Although MACO cluster boundaries are fairly constant over time, potential MACO site boundaries are defined by the projection of sensor pixels onto the MACO clusters for a given image. Figure 4 shows how selected MACO sites and site boundaries can vary in position and registration relative to the parent MACO cluster from image to image. This is simply due to variations from image to image due to the actual timing of the imaging operations and the exact location and attitude of the collection platform at the time.

The role that MACO sites play is elegantly simple in that they model the expected multi-spectral reflectance signature that should be obtained after all corrections are made. Differences between the expected reflectance signature values for each spectral band in a given MACO site and the surface reflectance estimate are related directly to the effects that must be corrected, albeit in a complex way. Atmospheric correction parameters can be generated using multiple MACO sites and other references within an image to create a surface reflectance value for each band at each pixel within the image under investigation.

One example of how atmospheric correction parameters can be generated is described in this simplified example. We can predict (based on the month/date of the year) that, for a particular MACO site in a particular phenotype, its surface reflectance in a given spectral band should be 0.4, and we use that value together with the measured radiance for that pixel (and possibly certain known information about the likely or unlikely atmospheric conditions at that geographic location) to estimate the relevant atmospheric parameters (e.g., Aerosol Optical Depth, Aerosol Type, Particle Size, and Water Vapor parameter).

MACO clusters are members of a diverse class of Models of Reality (MORs) that have three essential properties:
- They represent fairly common land uses / land cover (LULC) types and as a result, nearly every square kilometer patch of the earth land surface has the potential to contain at least one MACO class object.
- Their state and appearance in the near future can be reasonably estimated, given a recent estimate of their state and appearance, because their phenological behaviors follow well known progressions over time.
- They are big enough in extent that relatively pure, interior MACO site candidates within each MACO cluster or region can be identified and compared to other sites to verify their suitably for ground truth use.

MACO clusters fall into three distinct unmixed classes (see Figure 1) and one mixed class:
- Calibration MACO clusters are the previously mentioned pseudo invariant objects (PIOs) located in very specific places in the world. Examples include White Sands Missile Range (WSMR), New Mexico, Railroad Valley and Lunar Lake, New Mexico, Barreal Blanco, Argentina, regions of the Sahara Desert, and others. These locations tend to have minimal atmospheric effects or transient coverings often enough that they can be used for absolute calibration and characterization of longer term drift in sensors.
- Stable MACO clusters include expanses of barren land, coniferous trees, deep water, crushed rock, asphalt and concrete. The biological members of this class can go through modelable changes in appearance due to diurnal and seasonal effects. Transient coverings are easily detected using geography, time of year, weather and temperature records, and comparisons of observed spectral and spatial properties with known signature libraries.
- Dynamic MACO clusters include expanses of grass fields, broad area agriculture fields, parking lots and shallow water. The biological members of this class can go through fairly radical changes in appearance due to diurnal and seasonal effects. In a single year, a field of rotated corn or soybean, for example, can go from snow covered, to mixed soil and old harvest trash, to freshly tilled soil, to mixed soil and plants, to full canopy closure, to tasseling, to senescence, to harvesting, to mixed soil and harvest trash. Even though there is a lot of change, in one sense the progression is deterministic enough that errors in estimation of phenological phase, and physiological state are small compared to the positive benefit of the estimations of atmospheric conditions they enable. Transient coverings are easily detected using geography, time of year, weather and temperature records, and comparisons of observed spectral and spatial properties with known signature libraries.
- Mixed MACO clusters are the size of a MACO site. They are not homogenous. They are generated for a given image by estimating the spectral signature resulting from a linear combination of endmembers whose associated abundances are calculated directly from the observed fine spatial resolution panchromatic and multi-spectral imagery. The intent is to use this class of MACO sparingly until a sufficiently robust MACO library is established.

An endmember is a reference signature, usually corresponding to a particular material in a particular state. Each class of phenotypes has a range of endmembers. For example, a maple tree at the height of the growing season has big green leaves. In fall, the leaves turn yellow, orange, and red. So, some of endmembers for the maple tree might be: maple_tree_green, maple_tree_yellow, maple_tree_orange, maple_tree_red, maple_tree_bare, etc. There is a difference between flowering plum tree endmembers and maple tree endmembers, because during the growing season, flowering plum tree leaves are dark purple. Each endmember has a Bidirectional Reflectance Distribution Function (BRDF) with accounts for the position/angle of the illuminator (e.g., sun, lamp, sky) and the position/angle of the observer (e.g., satellite, eye). BRDF is applied to the endmember signature before a given pixel, which may contain multiple endmembers, is unmixed. The point of unmixing is to best explain what might be the abundances (i.e., percentages) of each of N endmembers, that would best explain the observed pixel after it has been corrected for atmospheric effects. The point of more or less pure MACOs is that we would rather not have to do the unmixing problem at the same time we are trying to figure which group of endmembers are in the given pixel.

### How are MACO clusters created?

MACO clusters are created by mining large global libraries of imagery looking for patches of earth that seem to change in predictable ways throughout the year. Large patches that show consistent group behavior are tessellated into roughly 300 m by 300 m or smaller MACO clusters. For each MACO cluster, we determine the basic MACO phenotype (see Figure 1) and the various endmembers that are observed throughout the year. We obtain the nominal Bidirectional Reflectance Distribution Function (BRDF) for each endmember from available sources, physical modeling and/or custom field measurements.

Various data is stored for each MACO site. This may include measured radiance in benign atmospheric conditions, calculated surface reflectance (including at different seasonal states), the BRDFs described above, and metadata such as the time and date of the measurement, the angular position from which the measurement was taken, the angular position of the sun, the weather/atmospheric conditions, the geographic coordinates of the MACO site, and other relevant data. The data can be stored at a ground station, a data center, or other suitable location.

### How are MACO sites prepared for radiance-to-reflectance conversion applications?

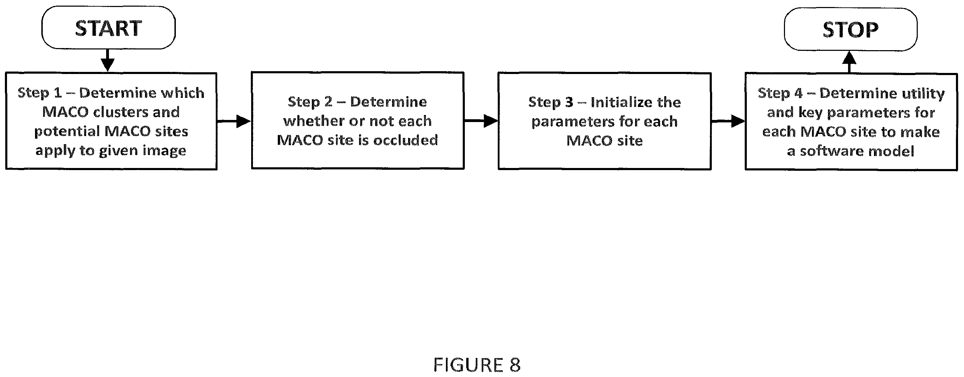

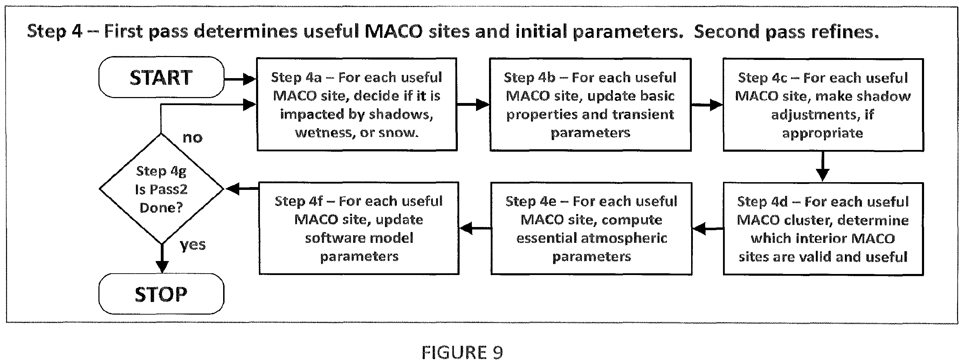

This section describes how specific MACO sites are selected and readied for use in external processes. Figures 8 and 9 describe the general flow.

Step 1 is to identify which MACO clusters and potential MACO sites are relevant to characterizing the atmospheric conditions and general states of the pixels in a given image. MACO clusters are either established prior to use, or may arise spontaneously for temporary use.

Established MACO clusters are already in the MACO Library, which can be searched to locate those MACO clusters that are interior to, or exterior, but proximate to an image boundary. Those MACO clusters that meet the criteria are included in the MACO Cluster List (MCL) for the image. Established MACO clusters are generally preferred because the essence of being an established MACO is that it is possible to make reasonably good predictions.

Temporary MACO clusters arise when either the established MACO clusters do not provide a dense enough mapping of candidate MACO sites to begin with within a sub-region of an image or because significant portions of established MACO clusters are impacted by transient effects such as snow. Homogeneous patches are identified within the low density sub-regions and then subjected to suitable radiance-to-reflectance (RTR) conversion functions using proximate MACO sites to drive the process. RTR conversion processes are not specifically described herein.

The resultant spectral signature of the homogenous patch is then compared to the Master Signature Library. If there is a signature match, then a temporary MACO is created and added to the MCL for the image. The temporary MACO is also flagged for external consideration as a newly established MACO. If there is not a signature match, then the homogeneous patch is also flagged for external analysis and potentially its signature may be added to the Master Signature Library.

Every potential interior MACO site for each MACO cluster in the MCL is placed in the MACO Site List (MSL) for the image. The utility of each MACO site in the MSL is set initially to "useful" and as the processing progresses, the status of a number of the MACO sites in the MSL will be set to "rejected".

Step 2 is to determine whether or not each MACO site in the MSL can be seen or not, i.e., is it blocked by an opaque cloud or a physical structure of some kind? The process to determine if it is blocked is not part of this invention. If the MACO site is blocked then we mark that MACO site as "rejected" and it will not participate in further correction processes for this image.

Step 3 is to establish the initial estimate of the expected endmember and state for each MACO site in the MSL. The expected endmember (e.g., corn) and state (e.g., growing/healthy) is updated for the current date based on the prior endmember and state, and elapsed time since the prior update. The nominal signature and BRDF for each endmember is retrieved for each MACO site in the MSL for use as the initial estimate of the expected reflectance using the sensor look and solar illumination vectors at the MACO site center for the date and time that it was imaged.

Step 4 involves a two pass process to determine utility and key parameters for each MACO site in the MSL. The first pass of Step 4 determines which of the useful MACO sites in the MSL are still useful and makes a gross correction to their expected endmembers, states and other parameters. The second pass refines the expected endmember, states and other parameters.

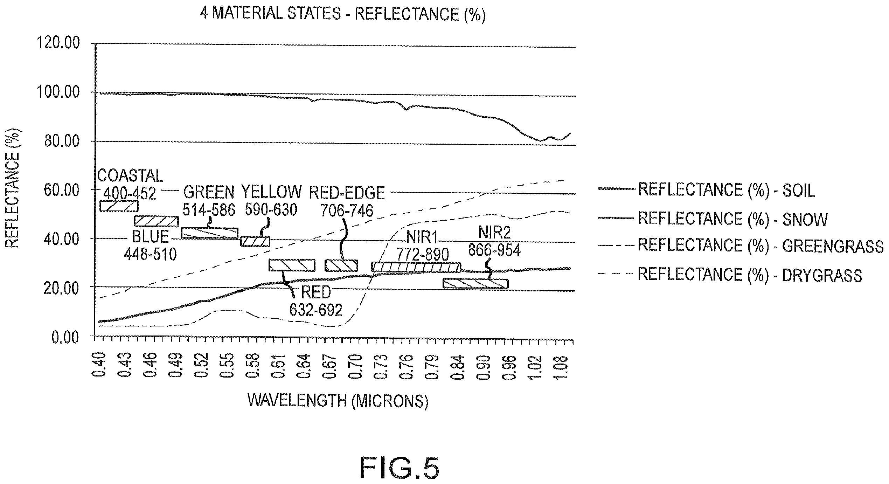

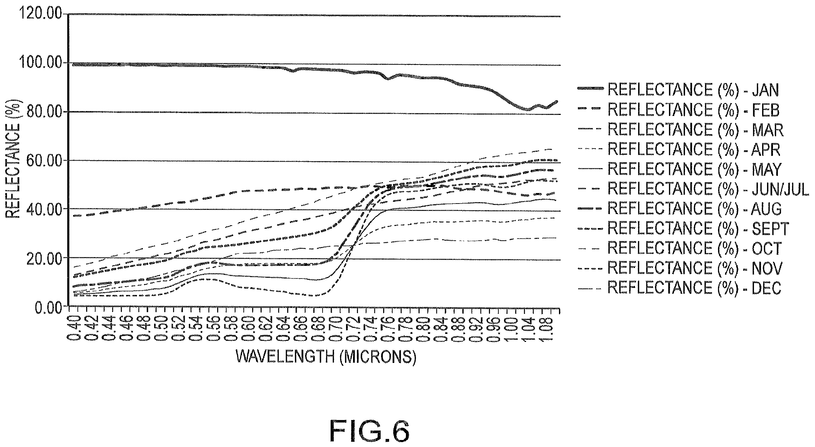

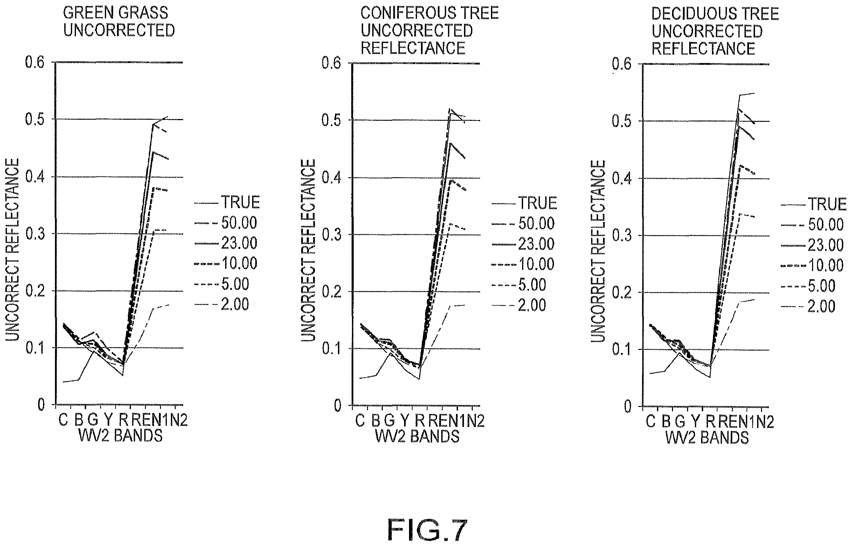

Step 4a determines if "useful" MACO sites in the MSL are impacted by one of several transient conditions, e.g., cloud shadow, structure shadow, wetness, or snow cover. Figure 5 shows the reflectance of four materials that are commonly part of the annual crop cycle. Figure 6 shows how they might mix during the year to produce various signatures. Figure 7 (in which different curves are shown for various amounts of aerosols, expressed in "visibility in kilometers") provides part of the evidence that to a first order, aerosol effects do not alter the green, yellow or red signature enough for three common land covers, e.g., green grass, coniferous trees and deciduous trees to be confused with snow or crop field endmembers, shadowed or not. Shadows can in some cases be less bright than in direct sunlight and slightly more bluish, depending on a number of conditions. Shadows can be relatively brighter if there is a lot of high level haze or there are proximate, highly reflective buildings and/or clouds.

So, we can determine whether or not we have shadows or no shadows on the nominal MACO site material or snow. Snow tends to be very flat between the green and red bands. Even if there is shadow on snow, the resultant green-yellow-red (or green-red) curve would not match the curves for sunlit soil, green grass or dry grass. Shadowed soil, green grass and dry grass are not likely to be confused by shadowed snow or each other. We can detect wetness conditions by comparing the dry and wet variants of the endmember and their respective BRDF. If we have good agreement with either the wet or dry variants, then we pick the best fitting endmember.

Step 4b updates the transient conditions parameters for each MACO site in the MSL, e.g., cloud shadow, structure shadow, wetness, snow cover, dust cover. The presence of wetness, snow cover and/or dust is admissible for MACO sites, but it is necessary to reset the expected endmember and state parameters for the MACO site accordingly. The expected reflectance and actual observed radiance for all non-shadowed, non-rejected MACO sites are updated.

Step 4c addresses special corrections for shadowed MACO site in the MSL. MACO sites are only useful as a set for atmospheric correction if they are consistent with sunlit conditions. If a given MACO site is shadowed, we assume that the expected reflectance is valid. But we need to alter the observed MACO site radiance signature from its darker shadowed state to a modeled sunlit state by using a simple function that effectively brightens each band in such a way to as to restore the effect of direct sunlight, including reversal of the bluish effect in the shadows. The expected reflectance and modeled sunlit observed radiance are updated for those shadowed MACO sites.

Step 4d does a validity check for each MACO site in the MSL. For each MACO cluster in the MCL for the image, the entire set of MACO sites in that MACO cluster are then compared to each other using the green-yellow-red (or green-red) signatures. Any MACO site that is not in approximately the same spectral state as the spectral state of the largest group of MACO sites, after shadow compensation if appropriate, is rejected from further consideration as a MACO site in the MSL. This process keeps transient effects like vehicles, fire damage, disease, etc., from corrupting the process.

Step 4e estimates the essential atmospheric correction parameters for each "still useful" MACO site in the MSL. Because each useful MACO site is a "known endmember" in a "known" state, an inversion process is used to estimate the essential atmospheric correction parameters that would explain the discrepancy between the expected MACO's reflectance and the retrieved reflectance.

Step 4f updates a software model for the given image by storing the state parameters (e.g., location, BRDF, expected signature) and essential atmospheric correction parameters for each useful MACO site in the MSL. The model enables fine spatial fidelity radiance-to-reflectance correction processes in external atmospheric correction algorithms.

Step 4g manages the two estimation passes. Once the first pass at estimating atmospheric conditions is done for the useful MACO sites, the second pass of the two pass process is executed using the first pass corrected reflectance signature for the useful MACO sites in the MSL as the starting expected signature instead of the nominal signature and BRDF. At the completion of the second pass, the state of the model for the given image is kept as the final. Once the atmospheric conditions have been estimated, the radiance-to-reflectance conversion can be performed.

### How are MACO clusters maintained?

Final computed reflectance signatures corresponding to the specific imaging time are stored along with the BRDF geometries for each useful MACO site in the MSL and each MACO cluster in the MCL. To the extent practical, the multispectral signatures are used to adjust the hyperspectral signatures for the MACO sites, enabling their use by other collection platforms. An estimate is made of the most probable phenological and physiological state at that time and physical and/or empirical models based on time (phenology), BRDF geometries, and physiological state for the specific MACO material are updated accordingly to facilitate prediction of most probable states at the next imaging event.

One application of the MACO techniques described herein is disclosed in concurrently-filed U.S. Patent Application No. 13/840,743, entitled "Atmospheric Compensation in Satellite Imagery".

While the embodiments of the invention have been illustrated and described in detail in the drawings and foregoing description, such illustration and description are to be considered as examples and not restrictive in character. For example, certain embodiments described hereinabove may be combinable with other described embodiments and/or arranged in other ways (e.g., process elements may be performed in other sequences). Accordingly, it should be understood that only example embodiments and variants thereof have been shown and described, the scope of protection being defined by the appended claims.

## Claims

1. A method of using reference sites comprising:
providing a plurality of reference sites that are referenced by geographic coordinates;
obtaining, at a sensor (20), an image of a portion of the surface of the Earth, for which geographic coordinates of the surface portion covered by the image are known;
identifying reference sites within the image based on geographic coordinates;
determining which of the identified reference sites are visible in the image; and
using the visible reference sites to compute one or more atmospheric parameters; wherein
the reference sites are modeled atmospheric correction objects (MACOs) that are identified as relatively homogeneous, and being likely to change over time in a predictable manner; **characterised in that**:
by detecting whether or not a MACO site is impacted by transient conditions, wherein the transient conditions include a shadow:
predicting a surface reflectance for the particular MACO site;
determining a radiance received at the sensor (20) for the particular MACO site; and
altering the radiance received at the sensor (20) for the particular MACO site to compensate for shadow effects;
wherein the one or more atmospheric parameters are computed by comparing the
altered radiance received at the sensor (20) for the particular MACO site with the predicted surface reflectance for the particular MACO site.

2. A method as defined in claim 1, wherein the one or more atmospheric parameters include Aerosol Optical Depth.

3. A method as defined in claim 1, further including, as regards a MACO site that is not impacted by shadows:
predicting a surface reflectance for the particular MACO site; and
determining a radiance received at the sensor (20) for the particular MACO site;
wherein the atmospheric parameters are computed by comparing the radiance received at the sensor (20) for the MACO site with the predicted surface reflectance for the MACO site.

4. A method as defined in claim 1, further including:
updating information associated with each visible MACO site.

5. A method as defined in claim 1, wherein the transient conditions further include one of cloud shadow, structure shadow, wetness, or snow cover.

6. A method as defined in claim 5, further including determining which type of transient condition impacts the MACO site.

7. A method as defined in claim 6, wherein the determining which type of transient condition operation includes using the radiance received in various spectral bands.

8. A method as defined in claim 7, wherein the spectral bands include at least a band in the green range of the spectrum and a band in the red range of the spectrum.

9. A method as defined in claim 1, wherein the altering operation includes increasing the radiance in the spectral bands.

10. A method as defined in claim 9, wherein the radiance is increased by a lesser amount in the blue band than in other spectral bands.

11. A method as claimed in claim 1 wherein at least some of the MACO sites vary seasonally, and surface reflectance for each such MACO site is estimated from data on the expected endmember and state of that MACO site, based on a prior identified endmember and state for that MACO site, updated on the basis of elapsed time since that data was last updated.

## Patentansprüche

1. Verfahren zur Verwendung von Referenzstandorten, das Folgendes umfasst:
Bereitstellen einer Vielzahl von Referenzstellen, auf die durch geographische Koordinaten Bezug genommen wird;
Erhalten, an einem Sensor (20), eines Bildes eines Abschnitts der Erdoberfläche, für den geographische Koordinaten des von dem Bild bedeckten Oberflächenabschnitts bekannt sind;
Identifizieren von Referenzstellen innerhalb des Bildes basierend auf geographischen Koordinaten;
Bestimmen, welche der identifizierten Referenzstellen in dem Bild sichtbar sind; und
Verwenden der sichtbaren Referenzstellen zur Berechnung eines oder mehrerer atmosphärischer Parameter:
wobei die Referenzstellen modellierte atmosphärische Korrekturobjekte (Modeled Atmospheric Correction Objects, MACOs) sind, die als relativ homogen identifiziert werden und sich wahrscheinlich mit der Zeit auf vorhersagbare Weise ändern:
**gekennzeichnet durch** Folgendes:
Erkennen, ob eine MACO-Stelle von Übergangsbedingungen beeinflusst wird oder nicht, wobei die Übergangsbedingungen einen Schatten umfassen;
Vorhersagen einer Oberflächenreflexion für die bestimmte MACO-Stelle;
Bestimmen einer am Sensor (20) empfangenen Strahlung für die bestimmte MACO-Stelle und
Ändern der am Sensor (20) empfangenen Strahlung für die bestimmte MACO-Stelle, um Schatteneffekte zu kompensieren;
wobei der eine oder die mehreren atmosphärischen Parameter berechnet werden, indem die am Sensor (20) empfangene veränderte Strahlung für die bestimmte MACO-Stelle mit der vorhergesagten Oberflächenreflexion für die bestimmte MACO-Stelle verglichen wird.

2. Verfahren nach Anspruch 1, wobei der eine oder die mehreren atmosphärischen Parameter die optische Tiefe des Aerosols umfassen.

3. Verfahren nach Anspruch 1, das ferner in Bezug auf eine MACO-Stelle, die nicht durch Schatten beeinflusst wird, Folgendes umfasst:
Vorhersagen einer Oberflächenreflexion für die bestimmte MACO-Stelle und
Bestimmen einer am Sensor (20) empfangenen Strahlung für die bestimmte MACO-Stelle;
wobei die atmosphärischen Parameter berechnet werden, indem die am Sensor (20) empfangene Strahlung für die MACO-Stelle mit der vorhergesagten Oberflächenreflexion für die MACO-Stelle verglichen wird.

4. Verfahren nach Anspruch 1, das ferner Folgendes umfasst:
Aktualisieren von Informationen, die jeder sichtbaren MACO-Stelle zugeordnet sind.

5. Verfahren nach Anspruch 1, wobei die Übergangsbedingungen ferner Wolkenschatten, Strukturschatten, Nässe oder Schneedecke umfassen.

6. Verfahren nach Anspruch 5, das ferner das Bestimmen umfasst, welche Art von Übergangszustand die MACO-Stelle beeinflusst.

7. Verfahren nach Anspruch 6, wobei das Bestimmen, welche Art von Übergangszustandsoperation verwendet wird, das Verwenden der in verschiedenen Spektralbändern empfangenen Strahlung umfasst.

8. Verfahren nach Anspruch 7, wobei die Spektralbänder mindestens eine Bande im grünen Bereich des Spektrums und eine Bande im roten Bereich des Spektrums umfassen.

9. Verfahren nach Anspruch 1, wobei der Änderungsvorgang das Erhöhen der Strahldichte in den Spektralbändern umfasst.

10. Verfahren nach Anspruch 9, wobei die Strahldichte im blauen Band um einen geringeren Betrag erhöht wird als in anderen Spektralbändern.

11. Verfahren nach Anspruch 1, wobei mindestens einige der MACO-Stellen saisonal variieren und die Oberflächenreflexion für jede dieser MACO-Stellen anhand der Daten des erwarteten Endmitglieds und des Zustands dieser MACO-Stelle geschätzt wird, basierend auf einem zuvor identifizierten Endmitglied und Zustand für diese MACO-Stelle, die auf der Grundlage der verstrichenen Zeit seit der letzten Aktualisierung dieser Daten aktualisiert wird.

## Revendications

1. Procédé d'utilisation de sites de référence, le procédé consistant à :
fournir une pluralité de sites de référence qui sont référencés par des coordonnées géographiques ;
obtenir, au niveau d'un capteur (20), une image d'une partie de la surface de la Terre, pour laquelle des coordonnées géographiques de la partie de surface couverte par l'image sont connues ;
identifier des sites de référence sur l'image sur la base de coordonnées géographiques ;
déterminer, parmi les sites de référence identifiés, ceux qui sont visibles sur l'image ; et
utiliser les sites de référence visibles pour calculer un ou plusieurs paramètres atmosphériques ;
les sites de référence étant des objets de correction atmosphérique modélisés (MACO) qui sont identifiés comme étant relativement homogènes et comme étant enclins à varier dans le temps de manière prévisible ;
le procédé étant **caractérisé par** les étapes consistant à :
détecter si un MACO est touché ou non par des conditions temporaires, les conditions temporaires incluant une ombre ;
prévoir un pouvoir réfléchissant de surface pour le site MACO particulier ;
déterminer une luminance énergétique reçue au niveau du capteur (20) pour le site MACO particulier ; et
modifier la luminance énergétique reçue au niveau du capteur (20) pour le site MACO particulier pour compenser des effets d'ombre ;
le ou les paramètres atmosphériques étant calculés en comparant la luminance énergétique modifiée reçue au niveau du capteur (20) pour le site MACO particulier au pouvoir réfléchissant de surface prévu pour le site MACO particulier.

2. Procédé selon la revendication 1, dans lequel le ou les paramètres atmosphériques incluent une profondeur optique des aérosols.

3. Procédé selon la revendication 1, consistant en outre, en ce qui concerne un site MACO qui n'est pas touché par des ombres, à :
prévoir un pouvoir réfléchissant de surface pour le site MACO particulier ; et
déterminer une luminance énergétique reçue au niveau du capteur (20) pour le site MACO particulier ;
les paramètres atmosphériques étant calculés en comparant la luminance énergétique reçue au niveau du capteur (20) pour le site MACO au pouvoir réfléchissant de surface prévu pour le site MACO.

4. Procédé selon la revendication 1, consistant en outre à :
mettre à jour une information associée à chaque site MACO visible.

5. Procédé selon la revendication 1, dans lequel les conditions temporaires comprennent en outre une condition parmi une ombre de nuage, une ombre de structure, de l'humidité et un enneigement.

6. Procédé selon la revendication 5, consistant en outre à déterminer quel type de condition temporaire touche le site MACO.

7. Procédé selon la revendication 6, dans lequel l'opération de détermination du type de condition temporaire consiste à utiliser la luminance énergétique reçue dans diverses bandes spectrales.

8. Procédé selon la revendication 7, dans lequel les bandes spectrales incluent au moins une bande la gamme verte du spectre et une bande dans la gamme rouge du spectre.

9. Procédé selon la revendication 1, dans lequel l'opération de modification consiste à augmenter la luminance énergétique dans les bandes spectrales.

10. Procédé selon la revendication 9, dans lequel la luminance énergétique est augmentée d'une quantité inférieure dans la bande bleue que dans d'autres bandes spectrales.

11. Procédé selon la revendication 1, dans lequel au moins une partie des sites MACO varie de façon saisonnière, et un pouvoir réfléchissant de surface pour chaque site MACO est estimé à partir de données sur la signature spectrale et l'état attendus de ce site MACO, sur la base d'une signature spectrale et d'un état identifiés au préalable pour ce site MACO, mis à jour sur la base d'un temps écoulé depuis la dernière mise à jour de ces données.
